**Europäisches Patentamt**

**European Patent Office**

**Office européen des brevets**

(19)

(11) Publication number : **0 445 524 B1**

# EUROPEAN PATENT SPECIFICATION

(12)

(45) Date of publication of patent specification :
**27.07.94 Bulletin 94/30**

(21) Application number : **91101376.1**

(22) Date of filing : **01.02.91**

(51) Int. Cl.⁵ : **B29C 65/10, B29C 59/08,**
**// B65D5:42, B29L9:00,**
**B29K23:00, B29K67:00**

(54) **Method of thermal fusion.**

(30) Priority : **02.02.90 JP 23729/90**

(43) Date of publication of application :
**11.09.91 Bulletin 91/37**

(45) Publication of the grant of the patent :
**27.07.94 Bulletin 94/30**

(84) Designated Contracting States :
**DE FR GB SE**

(56) References cited :
**US-A- 4 432 820**
**PATENT ABSTRACTS OF JAPAN, vol. 13, no.**
**577 (M-910), 20th December 1989; & JP-A-1 241**
**434 (DAINIPPON PRINTING) 23-03-1988**
**PATENT ABSTRACTS OF JAPAN, vol. 14, no.**
**60 (M-931), 5th February 1990; & JP-A-1 286**
**842 (DAINIPPON PRINTING) 17-11-1989**
**PATENT ABSTRACTS OF JAPAN, vol. 13, no.**
**498 (M-890), 9th November 1989;**
**& JP-A-1 199 847 (DAINIPPON PRINTING)**
**11-08-1988**

(73) Proprietor : **Toppan Printing Co., Ltd.**
**5-1, 1-chome, Taito**
**Taito-ku Tokyo (JP)**

(72) Inventor : **Imai, Takayuki, c/o Toppan Printing**
**Co., Ltd.**
**5-1, Taito 1-chome,**
**Taito-ku**
**Tokyo 110 (JP)**
Inventor : **Watanabe, Susumu, c/o Toppan**
**Printing Co., Ltd.**
**5-1, Taito 1-chome,**
**Taito-ku**
**Tokyo 110 (JP)**
Inventor : **Kato, Takeo, c/o Toppan Printing**
**Co., Ltd.**
**5-1, Taito 1-chome,**
**Taito-ku**
**Tokyo 110 (JP)**
Inventor : **Yamamoto, Hideki, c/o Toppan**
**Printing Co., Ltd.**
**5-1, Taito 1-chome,**
**Taito-ku**
**Tokyo 110 (JP)**

(74) Representative : **Bühling, Gerhard, Dipl.-Chem.**
**et al**
**Patentanwaltsbüro**
**Tiedtke-Bühling-Kinne & Partner**
**Bavariaring 4**
**D-80336 München (DE)**

## Description

## BACKGROUND OF THE INVENTION

This invention relates to a method of thermally fusing constituent materials for fabricating containers, and more particularly to a method by which a surface comprising a polyolefin and a polyester portion can be thermally fused to a polyester surface.

Containers of beverages such as milk, milk beverages, fruit beverages and alcoholic beverages are conventionally fabricated of paper base the inner surface of which is treated with polyolefins and the use of such constituent materials has been justified principally because of their hygienic property, waterproofness, moisture resistance and heat sealability.

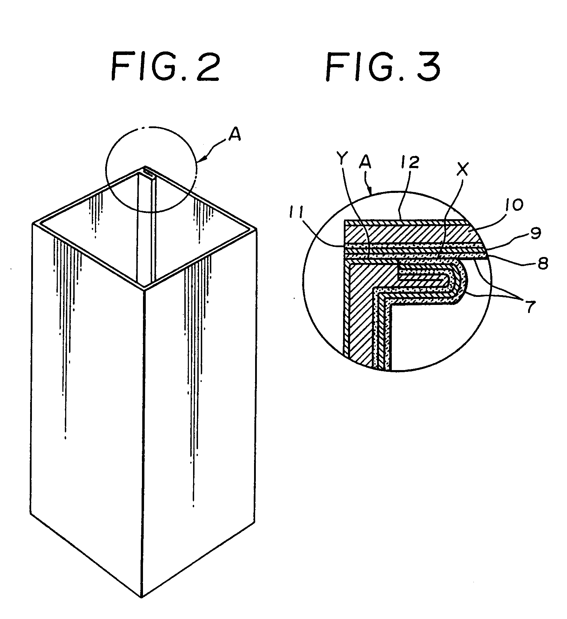

Among the conventional constituent materials for fabricating containers, those which have a body as shown in Fig. 2, particularly one intended to contain alcoholic beverages, are so adapted that the end faces of constituent materials will not be exposed at the joint to contact the contents of the container. Such end portions that are thermally fused together are encircled by A in Fig. 2 and shown enlarged in cross section in Fig. 3. The end portion of one constituent material is folded inwardly by the length necessary for bonding and the outer surface of the resulting turnup is bonded to the inner surface of the corresponding end portion of the other material. The method commonly used to achieve this consists of removing the outer portion of base paper (i.e., the portion that corresponds to the turnup and which extends generally to the center of the paper in the direction of its thickness) by a certain length from its end and folding back the remaining inner half portion of paper thickness in the outer removed area. Consequently, the inner surfaces of the two constituent materials are bonded together in the area indicated by X in Fig. 3 whereas the outer surface of one material is bonded to the inner surface of the other material in the area indicated by Y.

Polyolefins have conventionally been used as constituent materials for both the inner and outer surfaces of containers. In fact, however, polyolefins will adsorb or be permeable to the flavor ingredients of beverages, so that containers that use polyolefins as materials for making the inner surfaces are unable to maintain the inherent aroma and taste of beverages. In addition, when constituent materials are prepared by extrusion coating of polyolefins, oxidation is likely to occur to produce a malodor.

With a view to solving these problems, constituent materials for containers that replace polyolefins by polyesters, particularly those having good heat sealability, in the inside layer of the container wall have been proposed. This approach, however, has been found to be impractical if the constituent material to be bonded are based on paper since paper which works as a heat insulator prevents effective heat sealing of the end portions to be bonded together. Under these circumstances, the two surfaces to be thermally fused are scorched with a gas burner or some other suitable device until they are melted, whereupon the molten surfaces are superposed one on the other to be fused together. This method is commonly referred to as a "flame treatment" (see JP-A-1241434). However, if one of the two surfaces to be bonded is composed of two or more materials, for example, a polyester portion and a polyolefin portion, a flame treatment will produce lower oxides on the surface of the polyester portion. The oxides prevent the polyester surface from being effectively bonded to the other surface which is solely made of a polyester, whereby incomplete bonding occurs in the area indicated by X in Fig. 3.

## SUMMARY OF THE INVENTION

An object, therefore, of the present invention is to provide a method by which a surface having a polyolefin and a polyester portion can be thermally fused to a polyester surface to produce high bond strength.

The invention relates to a method by which a member having a surface comprising at least a polyolefin and a polyester portion and a member having a polyester surface are thermally fused together at said two surfaces and it comprises subjecting said first surface comprising at least a polyolefin and a polyester portion to a flame treatment, then treating said first surface with hot air, on the other hand, treating said second surface with hot air, and finally compressing the two surfaces to be thermally fused together.

## BRIEF DESCRIPTION OF THE DRAWINGS

Fig. 1 shows schematically the sequence of steps of performing thermal fusion by a method according to an embodiment of the present invention;
Fig. 2 is a perspective view showing the body of a container fabricated by the method of the present invention; and
Fig. 3 is an enlarged cross section of the portion indicated by A in Fig. 2 which shows part of the area bonded by the method of the present invention.

## DETAILED DESCRIPTION OF THE INVENTION

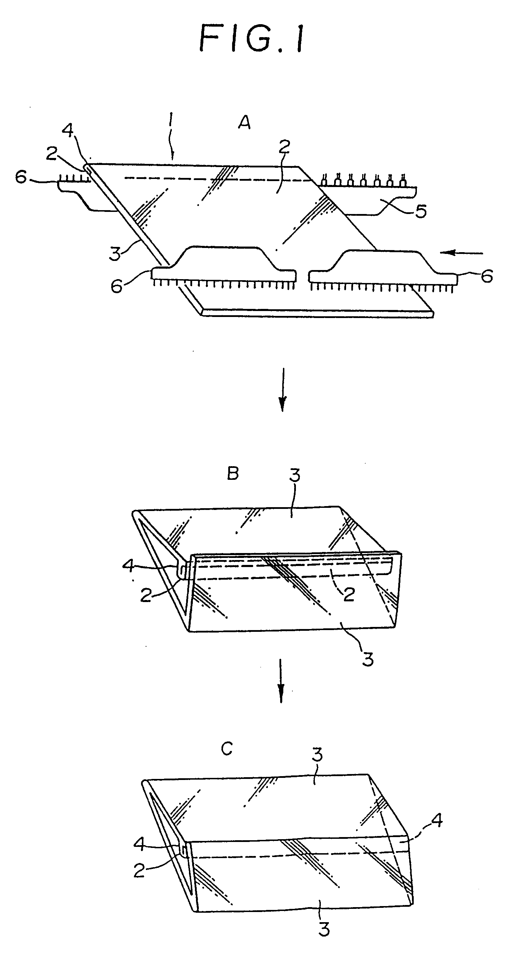

Fig. 1 shows schematically the sequence of steps of fabricating the body of a container by the method of thermal fusion of the present invention. Referring to Fig. 1, a laminated film 1 having on one side a polyester surface 2 that will provide the inner surface of a container and, on the other side, a polyolefin surface 3 that will provide the outer surface of the container as well as a polyester surface 2 at one end portion 4 is subjected to a flame treatment with the polyester surface at end portion 4 and the polyolefin surface being exposed to the flame of a gas burner 5 as shown in Fig. 1A. Subsequently, those polyester and polyolefin surfaces are treated with hot air coming through nozzles 6. On the other hand, the other end portion of the polyester surface on one side of the film is treated with hot air coming through nozzles 6. After these treatments, the end portion 4 is folded inwardly by the length necessary for bonding and the outer surface of the resulting turnup is brought into contact with the polyester surface at the other end which has been subjected to treatment with hot wir as shown in Fig. 1B. followed by compression and thermal fusion to make the body of a container having the inner and outer surfaces bonded together as shown in Fig. 1C.

The flame treatment performed in the present invention on the surface comprising a polyolefin and a polyester portion is primarily intended to introduce polar groups by oxidizing the polyolefin. A typical procedure of this flame treatment is by establishing contact with a flame produced by combustion with a establishmixture of air and an inflammable gas such as propane. The contact time is preferably in the range of 0.001 - 1.5 seconds, more preferably 0.1 - 0.6 second. If the contact time is less than 0.001 second, the polyolefin will not be sufficiently activated to produce a desired bond with the polyester. If the contact time is longer than 1.5 seconds, the two polyester surfaces can sometimes fail to be bonded together effectively by treatment with hot air.

The hot air treatment performed on both the polyester surface and the flame-treated surface comprising a polyolefin and a polyester portion is intended to soften those two surfaces. A typical procedure of this hot air treatment is by blowing hot (300 - 1,000°C) air against each surface through nozzles for 0.2 - 5 seconds. The surface comprising a polyolefin and a polyester portion need not be treated with hot air immediately after the flame treatment but it is preferably treated in-line with the flame treatment.

In the present invention, the two surfaces are superposed one on the other after the hot air treatment, preferably just after the treatment, and are compressed so that they are thermally fused together in a molten state. The compression of the two surfaces is preferably conducted at pressures not lower than 0.05 kg/cm$^2$.

The term "a member having a surface that comprises at least a polyolefin and a polyester portion" means one having at least the following two portions, one where a polyolefin is exposed on the surface as exemplified by portion Y in Fig. 3 and the other where a polyester is exposed on the surface as exemplified by portion X in Fig. 3. Illustrative polyolefins include polyethylene and polypropylene. In consideration of the ease with which containers can be fabricated, preferred polyesters are those polyester resins which have high heat sealability. Examples of such "heat-sealable" polyester resins include low-crystallinity and non-crystalline polyester resins that have glass transition temperatures (Tg) of 50 - 150°C. The use of polyester resins having Tg of less than 50°C can sometimes cause problems such as blocking of the resin which softens and becomes sticky during subsequent processing and storage of the container. Using polyester resins having Tg higher than 150°C can sometimes introduce difficulty in making bags or boxes by heat sealing. Further, highly crystalline polyester resins are not only low in heat sealability but also brittle.

Polyester resins are copolymers of polybasic acids and polyols. Preferred polybasic acids are those which contain terephthalic acid as a main component and preferred polyols are those which contain ethylene glycol as a main component. Other polybasic acids and polyols can be contained as comonomer components.

Specific examples of heat-sealable polyesters that can be used in the present invention include: (1) a co-condensation polymer of a diol and two or more dibasic acids including terephthalic acid as a main component; (2) a co-condensation polymer of terephthalic acid and two or more diols; and (3) a polymer alloy consisting of a modified polyolefin and polyethylene terephthalate or the co-condensation polymer (1) or (2).

Other dibasic acids than terephthalic acid that can be used as comonomer components include: aromatic dicarboxylic acids such as isophthalic acid, naphthalenedicarboxylic acid, diphenyl dicarboxylic acid diphenoxyethane dicarboxylic acid, diphenylether dicarboxylic acid and diphenylsulfone dicarboxylic acid; alicyclic dicarboxylic acids such as hexahydroterephthalic acid and hexahydroisophthalic acid; aliphatic dicarboxylic acids such as adipic acid, sebacic acid and azelaic acid; and oxyacids such as p-β-hydroxyethoxybenzoic acid, p-oxybenzoic acid and ε-oxycaproic acid.

Exemplary diols are glycols such as ethylene glycol, propylene glycol, 1,4-butanediol, 1,4-dicyclohexanedimethanol, trimethylene glycol, tetramethylene glycol, hexamethylene glycol, decamethylene glycol, neopentyl glycol, diethylene glycol, 1,1-cyclohexanedimethylol, 1,4-cyclohexanedimethylol, 2,2-bis(4-β-hydroxyethoxyphenyl)propane, bis-(4-β-hydroxyethoxyphenyl)sulfonecyclohexanediol, 1,4-bis(β-hydroxyethoxy)benzene and 1,3-bis(β-hydroxyethoxy)benzene.

Exemplary modified polyolefins include copolymers of ethylene and unsaturated carboxylic acids or esters thereof, as well as ionomers. Illustrative unsaturated carboxylic acids or esters thereof include acrylic acid, methacrylic acid, methyl acrylate, methyl methacrylate, ethyl acrylate and ethyl methacrylate. Copolymers of ethylene and unsaturated carboxylic acids or esters thereof preferably contain unsaturated carboxylic acids in amounts of 3 - 20 wt%; in the case of esters of such unsaturated carboxylic acids, their content is preferably in the range of 1 - 20 wt%.

The above-described polyester resins to be used in the present invention may contain nucleating agents or various additives including lubricants, anti-blocking agents, stabilizers, anti-haze agents and colorants. Useful nucleating agents are the fine particles of polyolefins or inorganic materials having a particle size of 2 - 10 μm. Exemplary polyolefins include low-density polyethylene, high-density polyethylene, linear low-density polyethylene and polypropylene; exemplary inorganic materials include carbon black, talc, gypsum, silica, alumina, calcium carbonate, titanium dioxide, graphite, glass powder and metal powders.

The term "a member having a polyester surface" as used herein means one the surface of which is solely composed of a polyester that may be the same as the "heat-sealable polyester resins" described above.

In the present invention, the member having a surface comprising at least a polyolefin and a polyester portion may be a separate film member from the member having a polyester surface. But from the viewpoint of ease of container fabrication, the two members are preferably integrated in the form of a single film, for example, a laminated film having a polyester surface layer on one side of a substrate and a polyolefin surface layer on the other side that has an end portion composed of a polyester part and a polyolefin part as shown in Fig. 3. From the viewpoint of ease of container fabrication, the width of the turnup of the portion including the polyester surface, or the length of area X in Fig. 3, preferably ranges from 1 to 15 mm. Illustrative layer arrangements that can be adopted in such laminated films include the combination of "polyester/adhesive layer/drawn plastics/metal foil/adhesive resin/paper/polyethylene" and that of "polyester/adhesive layer/drawn plastics with an evaporated glass coat/adhesive resin/paper/polyethylene". If the body of a container having the shape shown in Fig. 2 is to be fabricated by the method of the present invention, the area shown in Fig. 3 where two end portions are thermally fused together comprises a polyester layer 7, an adhesive layer 8, a biaxially drawn polyester layer 9, paper 10, an aluminum foil 11, and a polyolefin layer 12.

In the layer arrangements described above, the polyester and polyethylene layers are each made of the polymers already discussed above and their thicknesses are preferably within the ranges of 5 - 60 μm and 5 - 50 μm, respectively.

The adhesive layer may be composed of an adhesive resin, a laminate of such an adhesive resin and a polyolefin, or an adhesive agent or a primer coating agent. Exemplary adhesive resins include ethylene-α-olefinic copolymers and unsaturated carboxylic acid modified polyolefins having densities not higher than 0.910. Exemplary polyolefins include polyethylene, polypropylene, polybutene, an ethylene-vinyl acetate copolymer, an ethylene-acrylic acid copolymer, an ethylene-methacrylic acid copolymer, and an ethylene-α-olefinic copolymer. The term "unsaturated carboxylic acid modified polyolefins" as used herein means the polyolefins listed above that are copolymerized or graft-polymerized with a carboxylic acid group, an acid anhydride group or derivatives thereof. Specific examples of a carboxylic acid group, an acid anhydride group and derivatives thereof include methacrylic acid, maleic acid, fumaric acid, methacrylic acid anhydride, maleic anhydride, ethyl methacrylate, glycidyl acrylate and glycidyl methacrylate. Exemplary adhesives include one- or two-part reactive urethane based adhesives, polyester based adhesives, acrylic=urethane based adhesives and epoxyurethane based adhesives. Exemplary primer coating agents include polyethyleneimine and alkyl titanates.

Drawn plastic layers may be provided in order to prevent permeation of the contents due to cracking in metal foils or films having an evaporated glass coat. Drawn plastics that are preferably contained in the drawn plastic layer are biaxially drawn polyester or nylon resins that are prepared by biaxially drawing polyester or nylon resins by a factor of 4 - 6 in both the machine and transverse directions and then heat setting the drawn resins.

The substrate of the laminate to be used in the present invention may be of any type that is usable as a structural support for containers and, preferably, paper is contained in the constituent layer of the substrate. Preferred examples of paper that can be incorporated in the substrate include white paper board, milk carton paper and acid-resistant paper that have basis weights of 100 - 400 g/m$^2$.

The paper in the substrate is usually provided with a metal foil that renders the container impervious to beverages, and a preferred metal foil is an aluminum foil having a thickness of 6 - 200 μm. Metal foils may be provided on the substrate paper with the aid of unsaturated carboxylic acid modified polyolefins, ionomer resins and other resins that are the same as the already discussed adhesive resins.

4

Containers that are preferably fabricated using the method of the present invention are those in various forms which are intended to contain highly permeable beverages including alcoholic beverages, whiskeys, juice, coffee, ptisan, oolong, mineral water and soup.

The following examples are given for the purpose of further illustrating the present invention but are in no way to be taken as limiting.

Example 1

One end of a laminate having the layer arrangement shown below had the polyethylene layer separated from the inner paper layer by a given length from that end. The remaining part including the polyester layers was folded back inwardly by a width of 8 mm in such a way that the polyester (PET) layer would be positioned as the outer layer, whereby a laminated film having a surface comprising both a polyester and a polyethylene portion was prepared.

Layer arrangement

```
Polyester (PET)/ biaxially oriented polyester (OPET)/
  (60 µm)                          (12 µm)

aluminum foil (Al)/
    (9 µm)

ionomer  /  paper  /  polyethylene (PE)
(20 µm)   (320 g/m²)      (20 µm)
```

where the polyester was Selar PTX 207 (product of Mitsui-Du Pont Polychemical Co., Ltd.) which was composed of terephthalic acid, isophthalic acid and ethylene glycol.

The surface of the laminated film having a polyester and a polyethylene portion as shown in Fig. 1 was scorched with a flame produced by combustion of a gaseous mixture of propane and air. Following this flame treatment for 0.5 second, hot air (400°C) from nozzles 6 was blown against the treated surface of polyester and polyethylene portions as well as the polyester surface at the other end for 1.5 seconds. After the hot air treatment, the two ends of the film were immediately compressed at a pressure of 0.2 kg/cm² so that they were thermally fused. The strength of the resulting bond was measured by the following method and the result is shown in Table 1 below. Measurement of bond strength: The bonded film was cut to a strip 15 mm wide and the two sides of the film were pulled apart at a speed of 300 mm/min to measure the bond strength.

Examples 2 - 6

The procedure of Example 1 was repeated except that the polyester was replaced by PET G 5116 (product of Eastman Kodak Company) which was the condensation product of a dibasic acid component and a glycol component containing 1,4-cyclohexanedimethanol (Example 2). The procedure of Example 1 was also repeated except that the time of hot air treatment or flame treatment was changed as shown in Table 1 (Examples 3 - 5). Further, the procedure of Example 1 was repeated except that the polyester was replaced by a blend of Selar PTX 207 (composed of terephthalic acid, isophthalic acid and ethylene glycol) with 10 wt% ionomer resin (Example 6). The bond strength of each sample was measured as in Example 1 and the results are shown in Table 1.

Comparative Examples 1 - 4

The procedure of Example 1 was repeated except that no flame treatment was conducted (Comparative Example 1). The procedure of Comparative Example 1 was repeated except that the time of hot air treatment was changed as shown in Table 1 (Comp. Ex. 2 and 3). Further, the procedure of Example 6 was repeated except that no flame treatment was conducted (Comp. Ex. 4 ). The bond strength of each comparative sample was measured as in Example 1 and the results are shown in Table 1.

Comparative Examples 5 - 8

The procedure of Example 1 was repeated except that no hot air treatment was conducted (Comparative Example 5). The procedure of Comparative Example 5 was repeated except that the time of flame treatment was changed as shown in Table 1 (Comp. Ex. 6 - 8). The bond strength of each comparative sample was measured as in Example 1 and the results are shown in Table 1.
(The remaining space is left blank.)

Table 1

| | Run No. | Time of flame treat- ment, sec | Time of hot air treat- ment, sec | Bond strength, kgf/15 mm | |
| | | | | polyolefin/ polyester | polyester/ polyester |
|---|---|---|---|---|---|
| Example | 1 | 0.5 | 1.5 | 0.8 | 2.3 |
| | 2 | 0.5 | 1.5 | 0.8 | 2.5 |
| | 3 | 0.5 | 2.0 | 1.1 | 3.0 |
| | 4 | 1.0 | 1.5 | 0.8 | 1.8 |
| | 5 | 0.1 | 1.5 | 0.6 | 2.3 |
| | 6 | 0.5 | 1.5 | 1.2 | 3.0 |
| Comparative Example | 1 | - | 1.5 | 0.1 | 2.7 |
| | 2 | - | 1.0 | 0.1 | 1.3 |
| | 3 | - | 2.0 | 0.2 | 3.0 |
| | 4 | - | 1.5 | 0.6 | 3.0 |
| | 5 | 0.5 | - | 0.8 | 0.2 |
| | 6 | 1.0 | - | 0.8 | 0.3 |
| | 7 | 0.3 | - | not bonded | not bonded |
| | 8 | 2.0 | - | N.A. due to excessive heat | N.A. due to excessive heat |

As is clear from Table 1, the strength of bond between polyolefin and polyester surfaces was insufficient in Comparative Examples 1 - 4 where only hot air treatment was conducted, whereas the bonding between polyester surfaces was either insufficient or impossible in Comparative Examples 5 - 8 where only flame treatment was conducted. However, in Examples 1 - 6, satisfactory bonding was accomplished both between a polyolefin and a polyester surface and between polyester surfaces since a flame treatment was followed by a hot air treatment.

As discussed on the foregoing pages, the method of the present invention insures that a surface comprising a polyolefin and a polyester portion can be thermally fused to a polyester surface in-line with a flame treatment and a hot air treatment while achieving satisfactory strength of bond.
(The remaining space is left blank.)

An improved method by which a member having a surface comprising at least a polyolefin and a polyester portion and a member having a polyester surface are thermally fused together, which method comprises subjecting said first surface comprising at least a polyolefin and a polyester portion to a flame treatment, then treating said first surface with hot air, on the other hand, treating said second surface with hot air, and finally compressing the two surfaces to be thermally fused together. This method insures that the surface comprising a polyolefin and a polyester portion is thermally fused to the polyester surface to produce high bond strength. (The remaining space is left blank.)

## Claims

1. A method by which a member having a surface comprising at least a polyolefin and a polyester portion (2,3) and a member having a polyester surface (2) are thermally fused together at said two surfaces, which comprises subjecting said first surface comprising at least a polyolefin and a polyester portion (2,3) to a flame treatment, then treating said first surface with hot air, on the other hand, treating said second surface with hot air, and finally compressing the two surfaces to be thermally fused together.

2. A method according to claim 1 wherein the flame treatment is conducted for a contact time of 0.001 - 1.5 seconds.

3. A method according to claim 1 wherein said hot air treatment is conducted with hot air being blown at 300 - 1,000°C for 0.2 - 5 seconds.

4. A method according to claim 1 wherein the flame treatment is conducted in-line with the hot air treatment.

5. A method according to claim 1 wherein the polyolefin of which said polyolefin portion is composed is polyethylene or polypropylene.

6. A method according to claim 1 wherein the polyester of which said polyester portion is composed is a heat-sealable polyester resin.

7. A method according to claim 6 wherein said heat-sealable polyester resin has a glass transition temperature of 50 - 150°C.

8. A method according to claim 1 wherein said member having a surface comprising at least a polyolefin and a polyester portion (2,3) and said member having a polyester surface (2) are included in a single film (1).

9. A method according to claim 8 wherein said single film (1) is a laminated film having a polyester surface layer (2) on one side of a substrate and a polyolefin surface layer (3) on the other side which has an end portion comprising a polyester and a polyolefin portion.

10. A method according to claim 9 wherein said laminated film (1) has a paper-containing substrate.

11. A method according to claim 9 wherein said polyester portion has a width of 1 - 15 mm.
(The remaining space is left blank.)

## Patentansprüche

1. Verfahren, bei dem ein Material mit einer Oberfläche, die mindestens einen Polyolefin- und einen Polyesterbereich (2,3) umfaßt, und ein Material mit einer Polyesteroberfläche (2) an den beiden Oberflächen thermisch zusammengeschmolzen werden, umfassend die Unterwerfung der ersten Oberfläche, die mindestens einen Polyolefin- und einen Polyesterbereich (2,3) umfaßt, einer Flammbehandlung, wobei anschließend eine Behandlung der ersten Oberfläche und andererseits der zweiten Oberfläche mit Heißluft erfolgt, und die beiden Oberflächen zum Schluß zusammengepreßt werden, um sie thermisch zusammenzuschmelzen.

2. Verfahren nach Anspruch 1, wobei die Flammbehandlung innerhalb einer Kontaktzeit von 0,001 - 1,5 Sekunden durchgeführt wird.

3. Verfahren nach Anspruch 1, wobei die Heißluftbehandlung mit Heißluft durchgeführt wird, die 0,2 - 5 Sekunden lang bei 300 - 1.000°C aufgeblasen wird.

4. Verfahren nach Anspruch 1, wobei die Flammbehandlung und die Heißluftbehandlung aufeinander folgen.

5. Verfahren nach Anspruch 1, wobei das Polyolefin, aus das der Polyolefinbereich besteht, Polyethylen oder Polypropylen ist.

6. Verfahren nach Anspruch 1, wobei der Polyester, aus dem der Polyesterbereich besteht, ein heißsiegelbares Polyesterharz ist.

7. Verfahren nach Anspruch 6, wobei das heißsiegelbare Polyesterharz eine Glasübergangstemperatur von 50 - 150°C aufweist.

8. Verfahren nach Anspruch 1, wobei das Material mit einer Oberfläche, die mindestens einen Polyolefin- und einen Polyesterbereich (2,3) umfaßt, und das Material mit einer Polyesteroberfläche (2) in einem einzelnen Film (1) eingeschlossen sind.

9. Verfahren nach Anspruch 8, bei dem der einzelne Film (1) ein laminierter Film mit einer Polyesteroberflächenschicht (2) auf einer Seite eines Substrats und einer Polyolefinoberflächenschicht (3) auf der anderen Seite ist, die einen Endbereich aufweist, der einen Polyester- und einen Polyolefinbereich umfaßt.

10. Verfahren nach Anspruch 9, wobei der laminierte Film (1) ein papierhaltiges Substrat aufweist.

11. Verfahren nach Anspruch 9, wobei der Polyesterbereich eine Breite von 1 - 15 mm aufweist.


**Revendications**

1. Procédé par lequel un élément pourvu d'une surface comprenant au moins une partie en polyoléfine et une partie en polyester (2, 3) et un élément pourvu d'une surface en polyester (2) sont joints par fusion thermique sur les deux surfaces, ce procédé comportant les phases qui consistent à soumettre ladite première surface comprenant au moins une partie en polyoléfine et une partie en polyester (2, 3) à un traitement à la flamme, ensuite à traiter ladite première surface avec de l'air chaud, et d'autre part à traiter ladite deuxième surface par de l'air chaud, et finalement à serrer les deux surfaces pour les joindre l'une à l'autre par fusion thermique.

2. Procédé suivant la revendication 1, dans lequel le traitement à la flamme est effectué pendant un temps de contact de 0,001 à 1,5 secondes.

3. Procédé suivant la revendication 1, dans lequel ledit traitement à air chaud est effectué avec de l'air chaud soufflé à une température de 300 à 1.000°C pendant 0,2 à 5 secondes.

4. Procédé suivant la revendication 1, dans lequel le traitement à la flamme est effectué en ligne avec le traitement à air chaud.

5. Procédé suivant la revendication 1, dans lequel la polyoléfine constituant la partie en polyoléfine est le polyéthylène ou le polypropylène.

6. Procédé suivant la revendication 1, dans lequel le polyester constituant la partie en polyester est une résine polyester thermosoudable.

7. Procédé suivant la revendication 6, dans lequel la résine polyester thermosoudable a une température de transition vitreuse de 50 à 150°C.

8. Procédé suivant la revendication 1, dans lequel ledit élément comportant une surface qui comprend au moins une partie en polyoléfine et une partie en polyester (2, 3) et ledit élément comportant une surface en polyester (2) sont inclus dans une feuille unique (1).

9. Procédé suivant la revendication 8, dans lequel ladite feuille unique (1) est une feuille stratifiée comportant une couche superficielle (2) en polyester sur une des faces d'un substrat et une couche superficielle (3) en polyoléfine sur l'autre face qui a une partie d'extrémité comprenant une partie en polyester et une partie en polyoléfine.

10. Procédé suivant la revendication 8, dans lequel ladite feuille stratifiée (1) comporte un substrat contenant du papier.

11. Procédé suivant la revendication 9, dans lequel ladite partie en polyester a une largeur de 1 à 15 mm.

# FIG.1

A

B

C

# FIG.2   FIG.3